# EUROPÄISCHE PATENTSCHRIFT

(11) **EP 3 753 781 B1**
(45) Veröffentlichungstag und Bekanntmachung des Hinweises auf die Patenterteilung: **10.11.2021**
(21) Anmeldenummer: 20182276.4
(22) Anmeldetag: 09.09.2016
(51) Int. Cl.: B60N 2/28

(54) **KINDERSITZ ZUR ANBRINGUNG AUF EINEM KRAFTFAHRZEUGSITZ**
CHILD SEAT TO BE MOUNTED ON A MOTOR VEHICLE SEAT
SIÈGE POUR ENFANT DESTINÉ À ÊTRE FIXÉ SUR UN SIÈGE DE VÉHICULE AUTOMOBILE

(30) Priorität: 09.09.2015 DE 202015104791 U
(43) Veröffentlichungstag der Anmeldung: 23.12.2020
(62) Teilanmeldung aus: 19173486.2
(73) Patentinhaber: CYBEX GmbH, 95448 Bayreuth (DE)
(72) Erfinder: POS, Martin, 95444 Bayreuth (DE)
(74) Vertreter: Pfrang, Tilman

(56) Entgegenhaltungen:
- EP-A1- 1 927 502
- EP-A2- 0 958 959
- WO-A1-2013/189819

## Beschreibung

Die Erfindung betrifft einen Kindersitz zur Anbringung auf einem Kraftfahrzeugsitz gemäß Anspruch 1.

In diesem Zusammenhang sei angemerkt, dass im Rahmen dieser Erfindung der Begriff "Kindersitz" als Oberbegriff für (klassische) Kindersitze und Babyschalen zu verstehen ist. Somit sind für einen Kindersitz vorgesehene Merkmale im Rahmen dieser Erfindung grundsätzlich auch auf eine Babyschale anwendbar und umgekehrt, solange nichts Gegenteiliges erwähnt ist. Selbiges gilt für den Begriff "Kind", der ebenfalls als Oberbegriff für Kinder und Babys sowie Kleinkinder zu verstehen ist.

EP 0 958 959 A2 beschreibt einen Kindersitz mit Seitenwangen.

Kindersitze und Babyschalen, die auf einem Kraftfahrzeugsitz angebracht werden können, sind seit geraumer Zeit bekannt. Solche Kindersitze oder Babyschalen dienen als Sitzgelegenheit für Kleinkinder, Babys und Kinder und bieten diesen, insbesondere im Falle eines Unfalls, erhöhten Schutz. Die Befestigung derartiger Kindersitze kann mit dem Gurtsystem des Autos oder mittels Isofix-Klinken erfolgen. Eine derartige Befestigung sichert den Kindersitz im Falle eines Unfalls auf dem Kraftfahrzeugsitz, so dass dieser, insbesondere bei einem Auffahrunfall (Aufprall), auf dem Kraftfahrzeugsitz gehalten und nicht nach vorne geschleudert wird. Als problematisch haben sich diese Sitze jedoch bei einem Seitenaufprall erwiesen, da sowohl eine Gurtbefestigung als auch eine Befestigung mittels Isofix-Klinken den Kindersitz oder die Babyschale nur unzureichend gegen eine Seitwärts-Bewegung des Sitzes schützt. Aus diesem Grund ist es bekannt, den Kindersitz mit einem Seitenaufprallschutz auszustatten, wie beispielsweise in

WO 2013/189819 A1 beschrieben, die einen Kindersitz gemäß dem Oberbegriff des Anspruchs 1 zeigt. Bei diesem Kindersitz ist eine Sitzschale und ein an dieser aufgebrachter Seitenaufprallschutz vorgesehen, der von einer Ruhestellung in eine Funktionsstellung gebracht werden kann, wobei der Seitenaufprallschutz so positioniert ist, dass er etwaige Seitenkräfte hinter dem Rücken eines im Kindersitz sitzenden Kindes vorbei überträgt und in die Sitzschale einleitet.

Durch einen derartigen Seitenaufprallschutz wird die Sicherheit erhöht. Die Absicherung gegen die Folgen eines Seitenaufpralls wird jedoch als weiter verbesserungswürdig angesehen.

Es ist daher Aufgabe der Erfindung einen Seitenaufprallschutz aufzuzeigen, der sich durch eine verbesserte Absicherung gegenüber einem Seitenaufprall auszeichnet, insbesondere die Bedienbarkeit und Einstellung einer Funktionsstellung des Seitenaufprallschutzes vereinfacht.

Diese Aufgabe wird durch einen Kindersitz gemäß Anspruch 1 gelöst. Weitere Ausführungsformen der Erfindung ergeben sich aus den Unteransprüchen.

Gemäß der Erfindung wird ein Kindersitz zur Anbringung auf einem Kraftfahrzeugsitz mit einem Sitzelement, insbesondere eine Sitzschale, und einem Seitenaufprallschutz nach Anspruch 1 vorgeschlagen. Die Außenwand des Sitzelementes kann zur (rastenden) Aufnahme (Halterung) des Klappelementes in der Funktionsstellung ausgenutzt werden. Dadurch wird die Struktur des Kindersitzes vereinfacht, was mögliche Fehlfunktionen unwahrscheinlicher macht. Insbesondere werden Fehlfunktionen, die bei der Verwendung eines Halteriegels, wie beispielsweise gemäß WO 2013/189819 A1 vorgeschlagen, vermieden.

Bei der Standardbreite kann es sich um eine Breite von 440 mm gemäß dem AGREEMENT CONCERNING THE ADOPTION OF UNIFORMED TECHNICAL PRESCRIPTIONS FOR WHEELED VEHICLES, EQUIPEMENT AND PARTS WHICH CAN BE FITTED AND/ OR BE USED ON WHEELED VEHICLES AND THE CONDITIONS FOR RECIPROCAL RECOGNITION OF APPROVALS GRANTED ON THE BASIS OF THESE PRESCRIPTIONS (Revision 2, including the amendments which entered into force on 16 October 1995), E/ECE/324, E/ECE/TRANS/505, Rev. 1/ADD.15/Rev. 6 vom 19. Mai 2009, Annex 17 - Appendix 2, handeln.

Vorzugsweise weist der Kindersitz eine Stellungsüberführungseinrichtung auf, die derart ausgebildet ist, dass die Stellungsüberführungseinrichtung selbsttätig den Seitenaufprallschutz von seiner Ruhestellung oder einer Zwischenstellung zwischen Ruhe- und Funktionsstellung in seine Funktionsstellung überführt. Dabei wurde erkannt, dass aufgrund des Verbringens oder Überführens in die Funktionsstellung, was gemäß dem Stand der Technik per Hand erfolgt, eine Sicherheitslücke resultiert, beispielsweise wenn eine Arretierung nicht (richtig) ausgelöst oder durchgeführt wird oder nur eine Zwischenstellung zwischen Ruhe- und Funktionsstellung eingestellt wird. Dem Benutzer wird also die Aufgabe von der Stellungsüberführungseinrichtung abgenommen, den Seitenaufprallschutz in seine Funktionsstellung zu überführen. Insgesamt wird die Sicherheit erhöht.

Vorzugsweise ist eine Betätigungseinrichtung vorgesehen, die derart zum Zusammenwirken mit der Stellungsüberführungseinrichtung ausgebildet ist, dass die Stellungsüberführungseinrichtung selbsttätig den Seitenaufprallschutz von seiner Ruhestellung oder einer Zwischenstellung zwischen Ruhe- und Funktionsstellung überführt, wenn die Betätigungseinrichtung betätigt wird oder wurde. Dadurch wird die Bedienung weiter vereinfacht.

Unter einer "Zwischenstellung" soll insbesondere eine Stellung verstanden werden, bei der der Seitenaufprallschutz nur zum Teil von der Ruhestellung in die Funktionsstellung überführt wird, beispielsweise nur teilweise aufgeklappt ist (z.B. um einen Winkel, der 10-80%, weiter vorzugsweise 10-60% des gesamten Aufklappwinkels entspricht oder beispielsweise nur teilweise, insbesondere teleskopartig, ausgefahren ist, beispielsweise um 10-90%, insbesondere 10-60% des gesamten Ausfahrweges). Im Allgemeinen kann eine Zwischenstellung dann vorliegen, wenn ein distales Ende des Seitenaufprallschutzes 10-90%, vorzugsweise 10-60% seines Weges in seitlicher Richtung bei der Überführung zwischen Ruhe- in die Funktionsstellung zurückgelegt hat.

Vorzugsweise handelt es sich bei der Betätigungseinrichtung um einen Betätigungsknopf, insbesondere Druckknopf und/oder Schieberknopf. Dadurch wird die Bedienbarkeit weiter vereinfacht und damit die Sicherheit erhöht.

Die Betätigungseinrichtung kann in die Außenwand des Sitzelementes eingebettet sein. Insbesondere kann/können das Klappelement und/oder die Betätigungseinrichtung in die Außenwand des Sitzelementes eingeklappt sein. Auf diese Weise kann gewährleistet werden, dass der Kindersitz durch den vorgesehenen Seitenaufprallschutz in der Ruhestellung nicht über eine vorgegebene Breite, insbesondere Standardbreite, respektive Hüllkurve des Kindersitzes hinausragt und bei angelegtem Klappelement eine übliche Breite eines Kindersitzes nicht übersteigt, was die Handhabbarkeit des Kindersitzes zusätzlich begünstigt.

In einer konkreten Ausführungsform umfasst die Stellungsüberführungseinrichtung mindestens eine Feder, insbesondere Zugfeder. Weiterhin kann ein Langloch zur (gleitenden) Aufnahme einer Rotationsachse, vorzugsweise im Klappelement, vorgesehen sein. Durch eine Feder kann auf einfache Weise eine Kraft bereitgestellt werden, die den Seitenaufprallschutz in seine Funktionsstellung drängt. Ein Langloch zur (gleitenden) Aufnahme einer Rotationsachse (die beispielsweise ortsfest an dem Sitzelement angebracht ist) ermöglicht es auf einfache Art und Weise, das Klappelement gleichzeitig zu rotieren und in seine Funktionsstellung zu überführen (in der es insbesondere arretiert ist). Im Allgemeinen erlaubt ein derartiges Langloch also eine gleichzeitige Rotation und translatorische Verschiebung des Klappelementes. Insgesamt wird die Handhabung weiter vereinfacht.

Vorzugsweise ist ein proximales Ende des Klappelementes in der Funktionsstellung in einem Halteabschnitt (Halteaufnahme) der Außenwand des Sitzelementes rastend gehalten. Eine Halte- bzw. Rastfunktion wird also durch das Klappelement selbst in Zusammenwirken mit der ohnehin vorgesehenen Außenwand des Sitzelementes ermöglicht.

Das Klappelement kann in der Funktionsstellung so positioniert und gehalten sein, dass (nur) durch ein Ziehen des Klappelementes (z.B. an einem distalen Ende desselben) eine Überführung in die Ruhestellung möglich ist, insbesondere eine Arretierung in der Funktionsstellung (nur) durch das Ziehen aufgehoben werden kann. Im Allgemeinen erfolgt die Überführung von Funktionsstellung in Ruhestellung nicht selbsttätig (kann jedoch ggf. auch selbsttätig erfolgen), sondern wird per Hand durchgeführt, wie im Stand der Technik auch hinsichtlich der Überführung von Ruhestellung in Funktionsstellung. Dadurch wird das Gesamtsystem weiter vereinfacht. Insbesondere wurde erkannt, dass es im umgekehrten Fall (der Überführung von Funktionsstellung in Ruhestellung) weniger sicherheitsrelevant ist, ob die Ruhestellung letztendlich vollständig erreicht wird oder eine Zwischenstellung vorliegt.

Das Klappelement, insbesondere ein Abschnitt, der in eine proximal-distale Richtung verläuft, kann gebogen ausgebildet sein. Durch eine gebogene Ausführung des Klappelementes kann dieses platzsparend in die Ruhestellung überführt werden und gleichzeitig effektiv gegen einen Seitenaufprall schützen. Das Klappelement kann in einem Querschnitt senkrecht auf die proximal-distale Richtung, zumindest abschnittsweise, bogenförmig sein. Vorzugsweise weist das Klappelement in einem Querschnitt senkrecht auf die proximal-distale Richtung eine (zumindest im Wesentlichen) flache Oberseite und eine gebogene Unterseite auf. Auch durch derartige Maßnahmen kann das Klappelement effektiv in die Außenwand des Sitzelementes eingebettet werden (was insgesamt eine platzsparende und dennoch effektive Konstruktion ermöglicht). Die proximal-distale Richtung ist durch eine Richtung definier, die von einem proximalen Ende zu einem distalen Ende des Klappelementes verläuft.

Im Prinzip kann nur ein (Englisch: one) seitlich angebrachtes Seitenaufprallschutzelement bzw. Klappelement vorgesehen sein. Vorteilhafterweise sind jedoch an beiden Seiten des Kindersitzes entsprechende Seitenaufprallschutzelemente vorgesehen. Die (abgesehen von einer Spiegelung der jeweiligen Strukturen) identisch ausgebildet sein können. Es wäre auch denkbar, noch mehr als nur zwei Seitenaufprallschutzelemente (wie oben beschrieben) vorzusehen, beispielsweise je zwei auf beiden Seiten.

Nachfolgend wird die Erfindung anhand eines Ausführungsbeispiels beschrieben, das anhand der Abbildungen näher erläutert wird. Hierbei zeigen:
- Fig. 1: einen Ausschnitt des erfindungsgemäßen Kindersitzes in einer schematischen Seitenansicht;
- Fig. 2: einen weiteren Ausschnitt des Kindersitzes gemäß Fig. 1;
- Fig. 3: einen weiteren Ausschnitt des Kindersitzes, wobei das Innere des Kindersitzes teilweise freigegeben ist;
- Fig. 4: einen Ausschnitt des Kindersitzes analog Fig. 3 mit teilweise ausgeklapptem Klappelement;
- Fig. 5: einen Ausschnitt des Kindersitzes analog Fig. 3 und 4 mit vollständig ausgeklapptem Klappelement;
- Fig. 6: einen Ausschnitt des Kindersitzes mit ausgeklapptem Klappelement in einer schematischen Seitenansicht;
- Fig. 7: einen Schnitt durch einen Abschnitt des Kindersitzes;
- Fig. 8: einen Schnitt analog Fig. 7 in einer zweiten Stellung eines Klappelementes;
- Fig. 9: einen Schnitt analog Fig. 7 und 8 in einer weiteren Stellung des Klappelementes;
- Fig. 10: einen Schnitt analog Fig. 7-9 in einer Funktionsstellung des Klappelementes;
- Fig. 11: einen Abschnitt des Kindersitzes, wobei die Sicht auf das Innere des Kindersitzes teilweise freigegeben ist; und
- Fig. 12: eine Seitenansicht des erfindungsgemäßen Kindersitzes.

In der nachfolgenden Beschreibung werden für gleiche und gleichwirkende Teile dieselben Bezugsziffern verwendet.

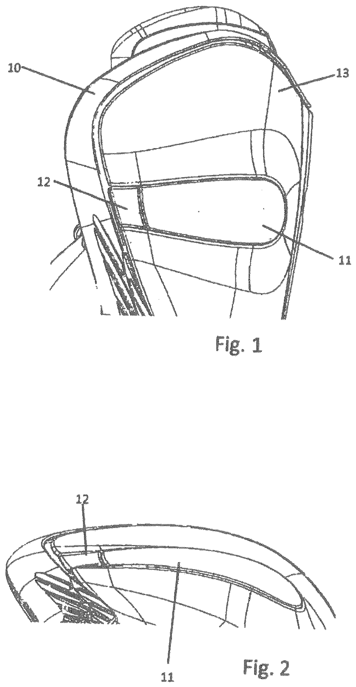

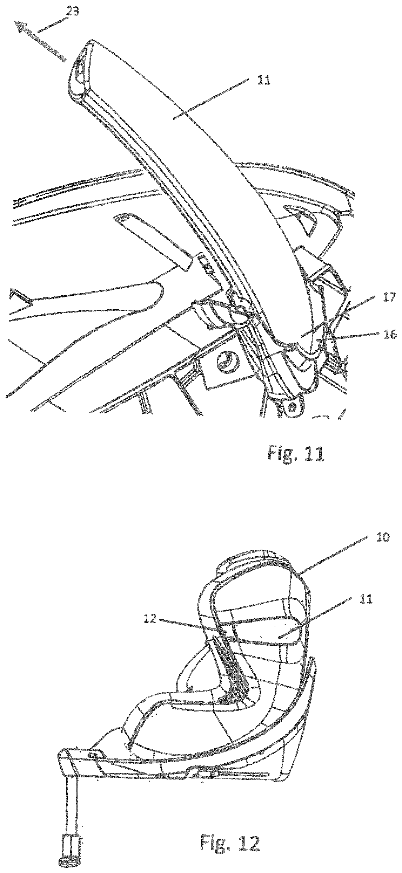

Fig. 1 zeigt eine Seitenansicht eines oberen Abschnittes des erfindungsgemäßen Kindersitzes gemäß Fig. 12. Der Kindersitz umfasst ein Sitzelement 10 (Sitzschale) sowie ein Seitenaufprallschutzelement, nämlich Klappelement 11, und einen Entriegelungsknopf 12. Wie in Figuren 1 und insbesondere 2 erkennbar, ist sowohl das Klappelement 11 als auch der Entriegelungsknopf 12 in eine Außenfläche 13 des Sitzelementes 10 eingebettet, so dass Entriegelungsknopf 12 und Klappelement 11 (siehe Fig. 2) zumindest im Wesentlichen bündig in die angrenzenden Abschnitte der Außenfläche des Sitzelementes 10 übergehen. Weiterhin ist in den Fig. 1 und 2 erkennbar, dass die an Klappelement 11 und Entriegelungsknopf 12 angrenzenden Abschnitte der Außenfläche 13 einen (vergleichsweise flachen) Vorsprung ausbilden. Dadurch wird das Klappelement bereits etwas nach außen verlagert, was den Seitenaufprallschutz verbessert.

Der Entriegelungsknopf 12 ist ausführungsgemäß axial gelagert, kann jedoch auch ein Schiebeknopf sein oder noch anders ausgeführt sein. Vorzugsweise ist der Entriegelungsknopf jedoch als Druckknopf ausgebildet.

Entriegelungsknopf 12 oder Klappelement 11 können auch auf der Außenfläche 13 (beispielsweise von dieser vorstehend) angebracht sein.

In den Fig. 1 und 2 befindet sich das Klappelement 11 in seiner Ruhestellung.

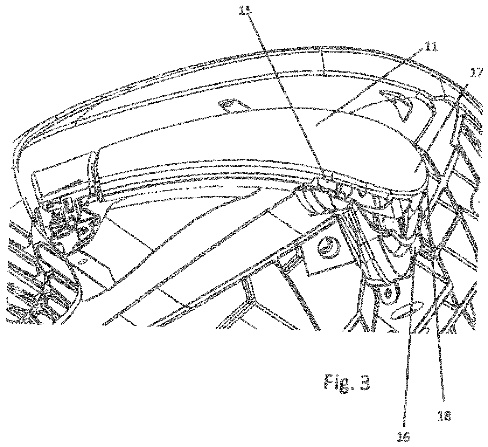

In der Ansicht gemäß Fig. 3, in der teilweise ein Inneres des Kindersitzes einsehbar ist, ist das Klappelement 11 mit weiteren Details gezeigt. Insbesondere ist erkennbar, dass das Klappelement 11 auf einer Achse 14 über ein im Klappelement 11 vorgesehenes Langloch 15 gelagert ist. Dadurch kann das Klappelement 11 einerseits um die Achse 14 rotiert werden und andererseits mit dieser Achse entlang des Langlochs gleiten. Weiterhin kann Fig. 3 eine Aufnahme 16 für ein proximales Ende 17 des Klappelementes 11 entnommen werden. In dieser Aufnahme 16 kann das Klappelement in seiner Funktionsstellung (nicht in Fig. 3 gezeigt) aufgenommen werden. Die Aufnahme 16 (Tasche) ist ausführungsgemäß als separates Teil ausgebildet, kann jedoch auch (direkt) ein Teil des Sitzelementes (der Sitzschale) sein, also einstückig mit der Außenwand des Sitzelementes ausgebildet sein. Wie im Einzelnen weiter unten erläutert, ist eine Zugfeder (nicht in Fig. 3 zu sehen) gezeigt, die eine Kraft bereitstellt, um bei Auslösen des Betätigungsknopfes 12 das Klappelement 11 nach außen zu rotieren, so dass es seine Funktionsstellung einnehmen kann.

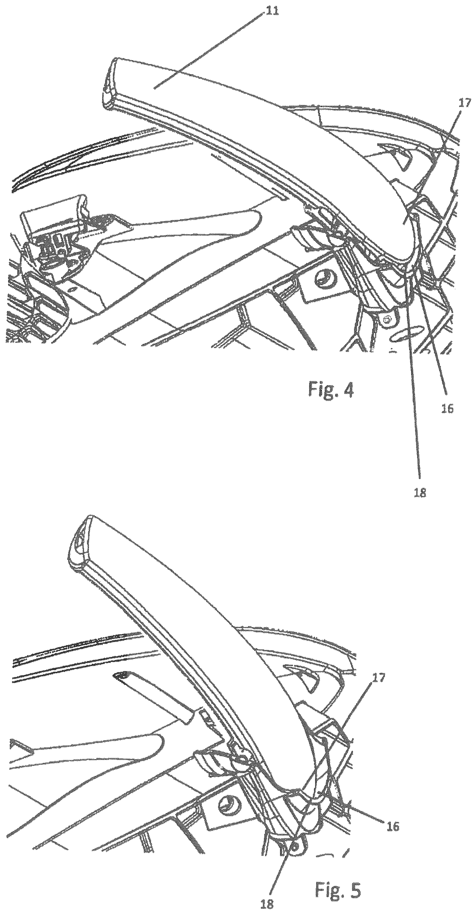

In Fig. 4 ist ein Zustand gezeigt, der eingenommen wird, kurz nachdem der Betätigungsknopf 12 ausgelöst wurde. Es handelt sich hier im Prinzip um eine willkürlich gewählte Zwischenposition, während des Bewegungsablaufs (Rotation) zur Überführung des Klappelements 11 von der Ruhestellung gemäß Fig. 3 in die Funktionsstellung gemäß Fig. 5. Fig. 5 zeigt also die Funktionsstellung, d.h. die Endposition des Klappelementes 11. In dieser Position ist das proximale Ende 17 des Klappelementes 11 in der Aufnahme 16 aufgenommen. Wie in den Fig. 3-5 erkennbar, ist eine Endkante 18 am proximalen Ende 17 des Klappelementes 11 gebogen (konvex) ausgebildet. Analog ist auch die Aufnahme 16 gebogen (konkav) ausgeführt. Das proximale Ende 17 kann dadurch berührend in der Aufnahme 16 gelagert werden. Insgesamt wird ein vorteilhafter Formschluss erreicht (wie nachfolgend im Detail erläutert).

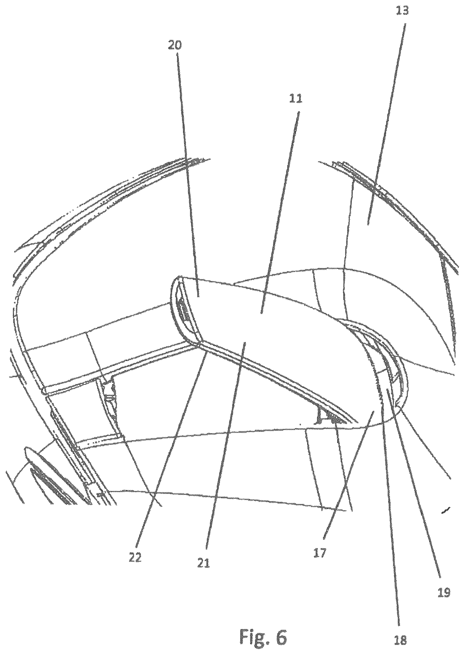

Fig. 6 zeigt einen Abschnitt einer Seitenansicht des Kindersitzes mit herausgeschwenktem Klappelement 11. Erkennbar ist hier, dass das Sitzelement 10 eine Führungsfläche 19 aufweist, entlang der das proximale Ende 17 des Klappelementes 11 während des Herausklappens entlanggleiten kann. Die (hier nicht erkennbare) Feder sorgt dafür, dass das proximale Ende 17 bzw. dessen Endkante 18 an die Führungsfläche 19 gedrückt wird. Auch die Führungsfläche 19 ist (im Querschnitt) konvex ausgebildet, also nach außen gewölbt.

Wie in den Fig. 1-6 erkennbar, ist das Klappelement gebogen ausgeführt und zwar in proximal-distale Richtung, die durch eine Richtung definiert wird, die von dem proximalen Ende 18 zu einem distalen Ende 20 (siehe Fig. 6) verläuft. Dadurch passt sich das Klappelement 11 der Außenwand 13 besonders vorteilhaft an.

In einem Querschnitt, senkrecht auf die proximal-distale Richtung, weist das Klappelement 11 eine flache Oberseite 21 und eine gebogene Unterseite 22 auf, wobei sich "Ober-" darauf bezieht, dass im eingeklappten Zustand diese Fläche von dem Sitzelement 10 weg weist und entsprechend "Unter-" sich darauf bezieht, dass die entsprechende Fläche zu dem Sitzelement im eingeklappten Zustand hin weist. Der Querschnitt des Klappelementes ist in proximal-distaler Richtung etwa halbmondförmig (auch die Oberseite 21 kann also zumindest geringfügig konkav ausgebildet sein).

Insgesamt sorgt die Führungsfläche 19 (siehe Fig. 6) dafür, dass im Zusammenwirken mit der Feder das Klappelement 11 in seine Funktionsstellung rotiert werden kann.

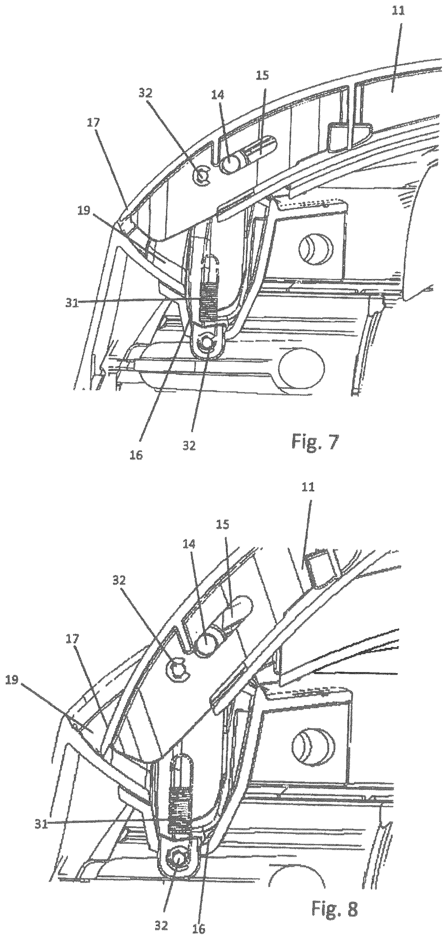

Das Zusammenwirken mit der Feder lässt sich den Fig. 7-11 entnehmen. Fig. 7 zeigt einen Querschnitt eines Abschnitts des Kindersitzes. Das Klappelement 11 befindet sich in seiner Ruhestellung. Wird nun der (nicht in Fig. 7 gezeigte, siehe beispielsweise Fig. 1 und 2) Betätigungsknopf 12 betätigt, wird das (ebenfalls nicht in den Fig. 7 gezeigte) distale Ende (siehe Fig. 6) 20 des Klappelementes 11 frei beweglich, so dass aufgrund der Federkraft eines in Fig. 7 gezeigten Federelementes 31 das proximale Ende 17 des Klappelementes 11 entlang der Aufnahme bzw. Führungsfläche 19 gleitet (dies ist in Fig. 8 gezeigt).

Zum besseren Verständnis sei angemerkt, dass das Federelement 31 zwischen den Aufhängepunkten 32 wirkt bzw. an diesen angreift (die in den Figuren gezeigte Feder also rein schematisch zu verstehen ist).

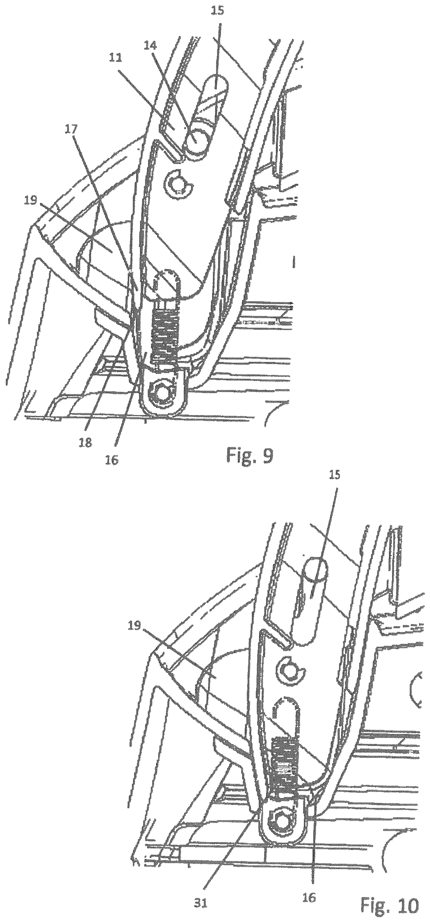

Während des Gleitens des distalen Endes 17 entlang der Führungsfläche 19 rotiert das Klappelement 11 um die Achse 14, bis eine in Fig. 9 gezeigte Zwischenposition erreicht wird. In dieser Zwischenposition ist die distale Endkante 18 in einer Stellung (genau) zwischen Führungsfläche 19 und Aufnahme 16. Wenn (bzw. weil) die Feder 31 nun weiter wirkt, gleitet das distale Ende 17 in die Aufnahme 16, bis es die Endstellung (Funktionsstellung) in Fig. 10 erreicht. Während dieses Hineingleitens in die Aufnahme 16 gleitet die Achse 14 entlang des Langlochs 15. Aus diesem Grund ist das Langloch 15 in proximal-distaler Richtung orientiert.

Fig. 11 zeigt das Klappteil 11 in der Funktionsstellung. Wird das Klappteil 11 in Richtung des Pfeiles 23 gezogen, bewegt sich das proximale Ende 17 aus der Ausnahme 16 (vgl. für den umgekehrten Fall die Fig. 9 und 10), so dass es nach Erreichen der Position gemäß Fig. 9 wieder eingeklappt werden kann und somit in seine Ruheposition verbracht werden kann. Dies erfolgt per Hand, entgegen der Zugkraft der Feder, die also überwunden werden muss.

Um das Klappelement (den Arm) wieder in seine flache (geschlossene) Position zu bringen, kann es ausreichen, dass dieser kurz gezogen bzw. angehoben wird und daraufhin in die Verriegelungslage zurückrotiert werden kann.

Die Aufnahme 16 (Tasche) hat den Vorteil, dass im Falle eines Auffahrunfalls (Aufpralls) das Klappelement 11 sicher abgestützt und gehalten wird, was insgesamt die Seitenaufprallschutzfunktion auf einfache Art und Weise verbessert.

Die vorliegende Beschreibung bezieht sich im Detail auf ein (Englisch: one) seitlich angebrachtes Seitenaufprallschutzelement bzw. Klappelement 11. Vorteilhafterweise sind jedoch an beiden Seiten des Kindersitzes entsprechende Seitenaufprallschutzelemente vorgesehen. Die (abgesehen von einer Spiegelung der jeweiligen Strukturen) identisch ausgebildet sein können. Es wäre auch denkbar, noch mehr als nur zwei Seitenaufprallschutzelemente (wie oben beschrieben) vorzusehen, beispielsweise je zwei auf beiden Seiten.

### Bezuaszeichen

- 10: Sitzelement
- 11: Klappelement
- 12: Entriegelungsknopf
- 13: Außenfläche
- 14: Achse
- 15: Langloch
- 16: Aufnahme
- 17: proximales Ende
- 18: Endkante
- 19: Führungsfläche
- 20: distales Ende
- 21: Oberseite
- 22: Unterseite
- 23: Pfeil
- 31: Federelement
- 32: Aufhängepunkt

## Patentansprüche

1. Kindersitz zur Anbringung an einem Kraftfahrzeugsitz, umfassend ein Sitzelement (10), insbesondere eine Sitzschale, und einen Seitenaufprallschutz, der von einer innerhalb einer vorgegebenen Breite, insbesondere Standardbreite, gelegenen Ruhestellung in eine außerhalb der vorgegeben Breite, insbesondere Standardbreite, gelegene Funktionsstellung und umgekehrt bringbar ist, wobei der Seitenaufprallschutz ein Klappelement (11) umfasst, wobei das Klappelement (11) in der Funktionsstellung arretiert ist, gegenüber einem Einklappen, wobei das Klappelement (11) in der Ruhestellung in die Außenwand (13) des Sitzelementes (10) eingebettet ist, und wobei das Klappelement auch in der Funktionsstellung teilweise in einer Außenwand des Sitzelementes eingebettet ist, so dass nur ein Abschnitt des Klappelementes über die Außenwand vorragt, **dadurch gekennzeichnet, dass** das Klappelement in der Funktionsstellung um mindestens 50%, jedoch höchstens 80% seiner Länge über die Außenwand des Sitzelementes vorragt.

2. Kindersitz nach Anspruch 1, **dadurch gekennzeichnet, dass** der Kindersitz eine Stellungsüberführungseinrichtung aufweist, die derart ausgebildet ist, dass die Stellungsüberführungseinrichtung selbsttätig den Seitenaufprallschutz von seiner Ruhestellung oder einer Zwischenstellung zwischen Ruhe- und Funktionsstellung in seine Funktionsstellung überführt.

3. Kindersitz nach Anspruch 2, **dadurch gekennzeichnet, dass** der Kindersitz eine Betätigungseinrichtung aufweist, die derart mit der Stellungsüberführungseinrichtung zusammenwirken kann, dass, wenn die Betätigungseinrichtung betätigt wird, die Stellungsüberführungseinrichtung selbsttätig den Seitenaufprallschutz von seiner Ruhestellung oder einer Zwischenstellung zwischen seiner Ruhe- und Funktionsstellung in seine Funktionsstellung überführt.

4. Kindersitz nach Anspruch 3, **dadurch gekennzeichnet, dass** die Betätigungseinrichtung einen Betätigungsknopf (12), vorzugsweise einen Entriegelungsknopf, insbesondere Druckknopf oder Schiebeknopf, umfasst.

5. Kindersitz nach Anspruch 4, **dadurch gekennzeichnet, dass** die Betätigungseinrichtung (12) in der Ruhestellung in die Außenwand (13) des Sitzelementes (10) eingebettet ist.

6. Kindersitz nach einem der vorhergehenden Ansprüche 2 bis 5, **dadurch gekennzeichnet, dass** die Stellungsüberführungseinrichtung mindestens eine Feder (31), insbesondere Zugfeder umfasst und/oder ein Langloch (15), vorzugsweise im Klappelement (11), zur Aufnahme einer Rotationsachse (14).

7. Kindersitz nach einem der vorhergehenden Ansprüche, **dadurch gekennzeichnet, dass**
ein proximales Ende (17) des Klappelementes (11) in der Funktionsstellung in einer Aufnahme der Außenwand (13) des Sitzelementes (10), rastend gehalten ist.

8. Kindersitz nach einem der vorhergehenden Ansprüche, **dadurch gekennzeichnet, dass**
eine proximale Endkante (18) des Klappelementes (11) zumindest abschnittsweise konvex ausgebildet ist.

9. Kindersitz nach einem der vorhergehenden Ansprüche, **dadurch gekennzeichnet, dass**
das Klappelement (11) in der Funktionsstellung so positioniert und gehalten ist, dass (nur) durch ein Ziehen des Klappelementes, beispielsweise an seinem distalen Ende, eine Überführung in die Ruhestellung möglich ist, insbesondere eine Arretierung in der Funktionsstellung (nur) durch das Ziehen aufgehoben werden kann.

10. Kindersitz nach einem der vorhergehenden Ansprüche, **dadurch gekennzeichnet, dass**
das Klappelement (11) insbesondere in einem Abschnitt, der in eine proximal-distale Richtung verläuft, gebogen ausgebildet ist und/oder in einem Querschnitt senkrecht auf die proximal-distale Richtung, zumindest abschnittsweise bogenförmig ist, insbesondere eine (zumindest im Wesentlichen) flache Oberseite und eine gebogene Unterseite aufweist.

11. Kindersitz nach einem der vorhergehenden Ansprüche, **dadurch gekennzeichnet, dass**
das Klappelement über mindestens 70% seiner Länge über die Außenwand des Sitzelementes vorragt.

## Claims

1. Child seat for attachment to a motor vehicle seat, comprising a seat element (10), in particular a seat shell, and a side impact protection which can be brought from a rest position located within a predetermined width, in particular standard width, into a functional position located outside the predetermined width, in particular standard width, and vice versa,
wherein the side impact protection comprises a folding element (11), wherein the folding element (11) is locked in the functional position, against folding in, the folding element (11) being embedded in the outer wall (13) of the seat element (10) in the rest position, and wherein the folding element also is partially embedded in an outer wall of the seat element in the functional position, so that only a portion of the folding element projects beyond the outer wall,
**characterised in that** the folding element in the functional position projects at least by 50% but at most by 80% of its length beyond the outer wall of the seat element.

2. Child seat according to claim 1,
**characterised in that**
the child seat has a position changing device which is designed such that the position changing device automatically moves the side impact protection from its rest position or an intermediate position between rest and functional position into its functional position.

3. Child seat according to claim 2,
**characterised in that**
the child seat has an actuating device which can cooperate with the position transfer device such that, when the actuating device is actuated, the position changing device automatically moves the side impact protection from its rest position or an intermediate position between its rest and functional positions into its functional position.

4. Child seat according to claim 3,
**characterised in that**
the actuating device comprises an actuating button (12), preferably an unlocking button, in particular a push button or a slide button.

5. Child seat according to claim 4,
**characterised in that**
the actuating device (12) in the rest position is embedded in the outer wall (13) of the seat element (10).

6. Child seat according to any of the preceding claims 2 to 5,
**characterized in that**
the position changing device comprises at least one spring (31), in particular a tension spring
and/or an elongated hole (15), preferably in the folding element (11), for receiving an axis of rotation (14).

7. Child seat according to one of the preceding claims,
**characterised in that**
in the functional position a proximal end (17) of the folding element (11) is held in a latching manner in a receptacle of the outer wall (13) of the seat element (10).

8. Child seat according to one of the preceding claims,
**characterised in that**
a proximal end edge (18) of the folding element (11) at least in sections is formed convex.

9. Child seat according to one of the preceding claims,
**characterised in that**
in the functional position the folding element (11) is positioned and held such that a transfer to the rest position is possible (only) by pulling the folding element, for example at its distal end, in particular a locking in the functional position can be released (only) by the pulling.

10. Child seat according to one of the preceding claims,
**characterised in that**
the folding element (11), in particular in a section extending in a proximal-distal direction, is formed curved
and/or in a cross-section perpendicular to the proximal-distal direction, is curved at least in sections, in particular has an (at least substantially) flat upper side and a curved lower side.

11. Child seat according to one of the preceding claims,
**characterised in that**
the folding element projects beyond the outer wall of the seat element over at least 70% of its length.

## Revendications

1. Siège pour enfant destiné à être fixé à un siège de véhicule automobile, comprenant un élément de siège (10), en particulier une coque de siège, et une protection contre les chocs latéraux qui peut être amenée d'une position de repos située à l'intérieur d'une largeur prédéfinie, en particulier d'une largeur standard, dans une position fonctionnelle située à l'extérieur de la largeur prédéfinie, en particulier de la largeur standard, et inversement,
dans lequel la protection contre les chocs latéraux comprend un élément rabattable (11), dans lequel l'élément rabattable (11) est bloqué dans la position fonctionnelle par rapport à un rabattement,
dans lequel l'élément rabattable (11) est encastré dans la paroi extérieure (13) de l'élément de siège (10) dans la position de repos et
dans lequel l'élément rabattable est également partiellement encastré dans une paroi extérieure de l'élément de siège dans la position fonctionnelle, de sorte que seule une partie de l'élément rabattable dépasse de la paroi extérieure,
**caractérisé en ce**
**que** l'élément rabattable dépasse de la paroi extérieure de l'élément de siège d'au moins 50 %, mais d'au plus 80 % de sa longueur, dans la position fonctionnelle.

2. Siège pour enfant selon la revendication 1,
**caractérisé en ce**
**que** le siège pour enfant présente un dispositif de transfert de position qui est conçu de telle sorte que le dispositif de transfert de position transfère automatiquement la protection contre les chocs latéraux de sa position de repos ou d'une position intermédiaire entre la position de repos et la position fonctionnelle dans sa position fonctionnelle.

3. Siège pour enfant selon la revendication 2,
**caractérisé en ce**
**que** le siège pour enfant présente un dispositif d'actionnement qui peut coopérer avec le dispositif de transfert de position de telle sorte que, lorsque le dispositif d'actionnement est actionné, le dispositif de transfert de position transfère automatiquement la protection contre les chocs latéraux de sa position de repos ou d'une position intermédiaire entre sa position de repos et sa position fonctionnelle dans sa position fonctionnelle.

4. Siège pour enfant selon la revendication 3,
**caractérisé en ce**
**que** le dispositif d'actionnement comprend un bouton d'actionnement (12), de préférence un bouton de déverrouillage, en particulier un bouton poussoir ou un bouton coulissant.

5. Siège pour enfant selon la revendication 4,
**caractérisé en ce**
**que** le dispositif d'actionnement (12) est encastré dans la paroi extérieure (13) de l'élément de siège (10) dans la position de repos.

6. Siège pour enfant selon l'une des revendications 2 à 5 précédentes,
**caractérisé en ce**
**que** le dispositif de transfert de position comprend au moins un ressort (31), en particulier un ressort de traction,
et/ou un trou oblong (15), de préférence dans l'élément rabattable (11), destiné à recevoir un axe de rotation (14).

7. Siège pour enfant selon l'une des revendications précédentes, **caractérisé en ce**
**qu'**une extrémité proximale (17) de l'élément rabattable (11) est maintenue par encliquetage dans un logement de la paroi extérieure (13) de l'élément de siège (10) dans la position fonctionnelle.

8. Siège pour enfant selon l'une des revendications précédentes, **caractérisé en ce**
**qu'**un bord d'extrémité proximal (18) de l'élément rabattable (11) est convexe au moins sur certaines parties.

9. Siège pour enfant selon l'une des revendications précédentes, **caractérisé en ce**
**que** l'élément rabattable (11) est positionné et maintenu dans la position fonctionnelle de telle sorte qu'un transfert dans la position de repos est possible (uniquement) en exerçant une traction sur l'élément rabattable, par exemple à son extrémité distale, en particulier un blocage dans la position fonctionnelle peut être libéré (uniquement) par ladite traction.

10. Siège pour enfant selon l'une des revendications précédentes, **caractérisé en ce**
**que** l'élément rabattable (11) est incurvé, en particulier sur une partie s'étendant dans une direction proximale-distale, et/ou est incurvé au moins sur certaines parties dans une coupe transversale perpendiculaire à la direction proximale-distale, en particulier présente une face supérieure (au moins sensiblement) plate et une face inférieure incurvée.

11. Siège pour enfant selon l'une des revendications précédentes, **caractérisé en ce**
**que** l'élément rabattable dépasse d'au moins 70 % de sa longueur de la paroi extérieure de l'élément de siège.
